# EUROPÄISCHE PATENTSCHRIFT

(11) **EP 0 944 467 B1**
(45) Veröffentlichungstag und Bekanntmachung des Hinweises auf die Patenterteilung: **15.01.2003**
(21) Anmeldenummer: 97952789.2
(22) Anmeldetag: 20.11.1997
(51) Int. Cl.: B29C 55/16

(54) **VERFAHREN UND VORRICHTUNG ZUR FOLIENAUFHEIZUNG SOWIE MESSEINRICHTUNG ZUR MESSUNG DER FOLIENTEMPERATUR**
METHOD AND DEVICE FOR HEATING FOILS AND ARRANGEMENT FOR MEASURING FOIL TEMPERATURES
PROCEDE ET DISPOSITIF POUR CHAUFFER DES FILMS ET DISPOSITIF DE MESURE POUR MESURER LA TEMPERATURE DE FILMS

(30) Priorität: 11.12.1996 DE 19651515
(43) Veröffentlichungstag der Anmeldung: 29.09.1999
(73) Patentinhaber: Brückner Maschinenbau GmbH, 83313 Siegsdorf (DE)
(72) Erfinder: BREIL, Jürgen, D-83355 Grabenstätt (DE); TOMASCHKO, Torsten, D-83317 Teisendorf (DE); SÄNZE, Johannes, D-83346 Bergen (DE)
(74) Vertreter: Flach, Dieter Dipl.-Phys.
(86) Internationale Anmeldenummer: EP9706499
(87) Internationale Veröffentlichungsnummer: WO98025753

(56) Entgegenhaltungen:
- DE-A- 2 356 743
- DE-A- 3 529 586
- US-A- 3 619 159
- US-A- 4 104 769
- US-A- 4 293 508
- US-A- 4 457 254
- US-A- 4 634 840
- US-A- 5 429 785
- US-A- 5 575 968
- PATENT ABSTRACTS OF JAPAN vol. 012, no. 257 (M-719), 20.Juli 1988 & JP 63 041126 A (TORAY IND INC), 22.Februar 1988,

## Beschreibung

Die Erfindung betrifft ein Verfahren und eine Vorrichtung zur Folienaufheizung sowie eine zugehörige Meßeinrichtung zur Folientemperaturmessung nach dem Oberbegriff des Anspruches 1, 9 bzw. 18. Die Erfindung nimmt also Bezug auf thermoplastische Folien, die vorzugsweise z.B. auf der Basis von Polyester, Polypropylen oder Polyamid hergestellt werden, wobei die bevorzugten Materialien Polyester, Polypropylen oder beispielsweise Polyamid nicht in reiner Form vorliegen müssen, sondern die Folien auch unter Verwendung von Abwandlungen dieser Stoffe und/oder ferner unter Verwendung weiterer Beimengungen und/oder Zugaben hergestellt werden können.

Einrichtungen zur Folienaufheizung und -temperierung, insbesondere auch bei simultanen Reckprozessen, sind bekannt.

So beschreibt z.B. die US 5 429 785 eine simultane Reckanlage mit mehreren Vor- und Zwischenheiz-Einrichtungen. Diese Heizeinrichtungen bestehen aus Heißluft-Heizeinrichtungen oder aus Infrarot-Strahlern. Aber auch eine Kombination aus beiden kann zur Aufheizung und Temperierung der Folie verwendet werden. Bei dem aus der vorstehend genannten US-Patentschrift bekannten Verfahren zur Herstellung von ultradünnen Folienfilmen mit einer Enddicke von weniger als 2,5µm können die vorstehend erwähnten Heizeinrichtungen an mehreren Stellen des Reckvorganges vorgesehen sein: Sie sind jeweils quer zur Abzugsrichtung der Folienbahn die gesamte Folienbreite überdeckend angeordnet.

Aus der US 5 071 601 ist ein Verfahren zur Herstellung eines thermoplastischen Kunststoffilms bekannt. Der Film wird dabei über mehrere sich konisch leicht verjüngende Walzen geführt, um darüber letztlich eine gekrümmte Endfolie herzustellen, die beispielsweise als Zwischenfolie für mehrschichtige Glasscheiben für Kraftfahrzeuge Verwendung findet. Die für den Herstellungsprozeß der Kunststoffolie benötigte Heizeinrichtung besteht aus mehreren quer zur Abzugsbahn der Kunststoffolie versetzt zueinander angeordneten Aufheizzonen einer Infrarot-Heizeinrichtung, wobei die Aufheizzonen von dem einen Randbereich der Folie zum gegenüberliegenden Randbereich zunehmend höhere Temperaturen erzeugen. Dies ist notwendig, um den erwähnten gewünschten gekrümmten Folienbahnverlauf zu erzielen. Allerdings weist dabei aufgrund der unterschiedlichen Materialreckung die Dicke der Folienbahn unterschiedliche Werte auf, was allerdings bei der spezifischen Verwendung und dem spezifischen Einsatz der Kunststoffolienbahn zur Herstellung von Autoscheibenglas nur von untergeordneter Bedeutung ist.

Es hat sich nunmehr aber gezeigt, daß bei der Simultanstreckung von Kunststoffolien im mittleren Folienbahnbereich zwar eine relativ gleichmäßige Verstreckung möglich ist, daß aber noch Probleme vor allem im Folienrandbereich auftreten. Denn der Folienrandbereich weist zum einen stets eine größere Materialdicke als der verbleibende mittlere Folienbahnabschnitt auf. Die Reckbedingungen werden aber auch dadurch verschlechtert, daß am Folienbahnrand ein schlechterer Wärmeübergang festzustellen ist, der unter anderem auch durch die am Folienrand angreifenden Kluppen verursacht wird.

Aufgabe der vorliegenden Erfindung ist es von daher, ein Verfahren sowie eine Vorrichtung zur Durchführung des Verfahrens zu schaffen, die es ermöglichen, in qualitativer Hinsicht verbesserte Kunststoffolienbahnen in einem Reckprozeß herzustellen.

Die Aufgabe wird erfindungsgemäß bezüglich des Verfahrens entsprechend den im Anspruch 1 und bezüglich der Vorrichtung entsprechend den im Anspruch 9 angegebenen Merkmalen gelöst. Vorteilhafte Ausgestaltungen der Erfindung sind in den Unteransprüchen angegeben.

Es hat sich nunmehr gezeigt, daß bei der Verstreckung von Folien in Längs-, Quer- oder simultanen Reckprozessen im Vergleich zur Filmmitte dickere Ränder vor und während des Streckprozesses gesondert temperiert werden müssen, da aufgrund der größeren Dicke und des schlechteren Wärmeübergangs am Rande die Solltemperatur nicht allein über eine Anblasung mit Standarddüsen erreicht werden kann. Ein weiterer Grund für die notwendige unterschiedliche Temperierung des Folienrandes und des mittleren Bereiches der Folienbahn liegt in dem jeweils unterschiedlichen Reckverhalten. So wird nämlich der von den Kluppen ergriffene Folienrand im wesentlichen längsgereckt, während das verbleibende Folienbahnmaterial biaxial verstreckt wird.

Des weiteren kommt dem Folienrand, insbesondere bei der simultanen Verstreckung die wesentlichen Aufgabe der Krafteinleitung und -verteilung zu. Da mit der Temperatur die Steifigkeit des Randes in weiten Bereichen beeinflußt werden kann, kommt einer definierten Einstellung und Kontrolle der Randstreifentemperatur eine wesentliche Bedeutung zu.

Bei den bisherigen Reckanlagen im allgemeinen und den Simultanreckanlagen im besonderen ist der Folienrand nicht gesondert temperiert worden. Zudem gab es bisher auch keine Lösungen, um diesen Rand gezielt einer speziellen Aufheizung zu unterziehen. Dabei ist die Abschottung des Folienrandes durch das Transportsystem, d.h. vor allem die am Folienrand in diskreten Abständen angreifenden Kluppen besonders problematisch, da dadurch eine zielgerichtete Folienrand-Aufheizung weiter verschlechtert wird.

Zwar ist aus der WO 94/04740 eine Vorrichtung zum Beblasen einer ausgebreitet weitertransportierten textilen Stoffbahnen mittels Injektordüsen bekannt geworden, welche einen der Warenbahnoberseite und der Warenbahnunterseite zugewendeten Blas- oder Düsenkasten umfaßt. Dieser Textil-trockner ist quer zur Warenbahn angeordnet. Wird eine spezielle Kantentrocknung gewünscht, so können Düsen auch nur auf die Randbereiche der Stoffbahn gerichtet oder nur dort mit Behandlungsgas beaufschlagt sein. Es handelt sich insoweit allerdings um einen gattungsfremden Stand der Technik, da der vorliegende Anmeldungsgegenstand eine Vorrichtung zur Temperierung von Kunststoffolienbahnen bei simultanen Reckprozessen betrifft, und dabei im Kunststoffmaterialienquerschnitt bestimmte Temperaturverteilungen erzielt werden müssen.

Ferner ist aus der DE 25 42 507 A1 eine Vorrichtung zum zonenweisen Regeln der Dicke einer streckbaren, thermoplastischen Folienbahn bekannt geworden. Bei dieser bekannten Vorrichtung ist keine separate Folienrandaufheizung vorgesehen, sondern es wird lediglich vorgeschlagen, oberhalb und gegebenenfalls auch unterhalb der Folienbahn quaderförmige Luftschächte anzuordnen, die jeweils einen Einund einen Auslaß für die zuführbare Heißluft aufweisen, wobei in den einzelnen Schächten die Durchflußmenge der zugeführten Heißluft durch jalousieähnliche, individuell bewegbare Lamellen veränderbar ist. Diese bekannte Vorrichtung erlaubt aber keine eigentliche separate Folienrandaufheizung, da nur einheitlich für die Temperaturbehandlung der gesamten Kunststoffolienbahn Heißluft mit einem Temperaturniveau zur Verfügung gestellt werden kann. Nicht die Temperatur, sondern nur die Heißluftmenge ist zonenweise regelbar. Zudem soll ausschließlich nur mittels Heißluft erwärmt werden, ohne daß erkannt wurde, daß gerade in der kombinierten Wärmebehandlung mittels Heißluft und mittels Infrarotbestrahlung eine optimale Folienrandaufheizung und damit Temperaturregelung für den Folienrand erzielbar ist.

Die vorliegende Erfindung bietet zahlreiche Vorteile. Durch die erfindungsgemäße Randstreifenheizung für Simultan-Reckanlagen wird die Qualität der herzustellenden Kunststoffolienbahnen gegenüber herkömmlichen hergestellten Folien deutlich verbessert. Nunmehr können die herstellungsbedingt dickeren Materialränder einer Kunststofffolienbahn zielgerichtet so temperiert und erwärmt werden, daß bei einem simultanen Reckprozeß auch dieser Randbereich einer Kunststoffolienbahn optimal gereckt werden kann. Um eine optimale Verstreckbedingung für die Folie zum einen im Hinblick auf deren Laufstabilität und zum anderen auf die Kräfteeinleitung vom Folienrand auf die zu verstreckende Folienbahn insgesamt zu erreichen, ist es notwendig, daß der Folienrand und das weitere Folienmaterial trotz unterschiedlicher Dicke auf gleicher Temperatur erwärmt werden. Durch den erfindungsgemäß kombinierten separaten Temperiervorgang für den Folienrand mittels Heißluft und Infrarotstrahlung läßt sich fast jeder gewünschte Temperaturverlauf über die Breite des Folienrandes hinweg einstellen und realisieren.

Die Verwendung der Infrarotstrahlung zur Aufheizung und Temperierung des Folienrandes ist besonders geeignet. Denn das Folienmaterial kann die Energie oder Leistung der Infrarotbestrahlung aufgrund des höheren Wärmeübergangs auf einer wesentlich kürzeren Strecke und damit innerhalb einer wesentlich kürzeren Zeit aufnehmen als Heißluft. Insbesondere durch die Verwendung von kurzwelligen Strahlen (1,1 µm) dringt die Strahlung tiefer in das Folienrandmaterial ein. Dabei läßt sich hohe Leistung auf kleinem Raum erzeugen und in die Folie einleiten. Durch eine vorzugsweise gebündelte Strahlung ergibt sich nicht nur eine hohe Leistungsausbeute, sondern auch eine flächengenaue Aufheizung. Dabei könnte aber die Oberfläche der Folie durch einen zu hohen Wärmeeintrag geschädigt werden, wobei gleichzeitig die Unterseite der Folie möglicherweise noch unterhalb der an sich zu erreichenden Temperaturbereiche liegt. Von daher liegt die Lösung in der gleichzeitigen gebündelten Beaufschlagung des Folienrandes mit Luft mit hoher Geschwindigkeit. Die Heißluft wird auf eine bestimmte Solltemperatur so eingestellt, daß darüber der Prozeß so gesteuert wird, daß eine schnelle, über die Foliendicke gleichmäßige Aufheizung erreicht wird (Vergleichmäßigung der durch die Infrarotstrahlung eingebrachten Wärme). Insbesondere für spezielle Randgeometrien mit einem zur Folienmitte hin abfallenden Dickenprofil ist die zusätzliche Luft hilfreich und wichtig, um zu vermeiden, daß durch den Infrarotstrahler die dünneren Bereiche des Randprofils überheizt und zerstört werden.

Der für den Energieeintrag wesentliche Faktor ist durch den Infrarot-Strahler bedingt. Dabei wirkt sich positiv aus, daß der dickere Folienrand im Vergleich zum dünneren sich anschließenden Folienmaterialabschnitt ein höheres Absorbtionsverhalten aufweist. Das Absorbtionsverhalten ist also abhängig von der Filmdicke. Dies kann besonders gut bei sogenannten Hellstrahlern (Strahlertemperatur über 2000°C) ausgenützt werden. Für den Aufheizvorgang bedeutet dies, daß das dünnere Folienmaterial mehr Strahlung transmittiert, als der vergleichsweise dickere Folienrand, so daß die dünneren Folienmaterialabschnitte benachbart zum Rand somit nicht überhitzt werden können, was beim Verstrecken zu Abrissen führen würde.

Allerdings läßt sich eine geringfügig höhere Temperatur des Filmes dann nicht vermeiden, wenn die vorzugsweise speziell für die Folienranderwärmung vorgesehenen und einstellbaren seitlichen Anblasdüsen mit der sogenannten Prozeßtemperatur betrieben werden. Während also beispielsweise die Kunststoffolie (bis auf deren Randbereiche) insgesamt mit Heißluft in den entsprechenden Aufheizzonen mit einer Temperatur von beispielsweise 93°C (= Prozeßtemperatur) beaufschlagt werden kann, wird bevorzugt im Randbereich eine geringfügig geringer eingestellte Prozeßtemperatur für die Heißluft verwendet. Eine Verringerung der Lufttemperatur für die seitlichen Anblasdüsen auf beispielsweise 90°C führt aber dann durch die Kombination mit dem Infrarot-Strahler dazu, daß sich die Temperatur zwischen Rand und verbleibendem. Filmmaterial sehr exakt auf ein fast gleichbleibendes gewünschtes Temperaturniveau einstellen läßt.

Die erfindungsgemäßen Vorteile einer fast völlig gleichbleibenden Temperierung einer Folie über die gesamte Breite hinweg ergeben sich in Kombinaten von Infrarotstrahlung und Konvektion (Anblasung durch Heißluft), selbst dann, wenn dieser kombinierte Temperierungsvorgang nur von einer Seite (beispielsweise der Oberseite der Folie) durchgeführt wird. Auch hier ist das Temperaturprofil über die gesamte Foliendicke faktisch gleich konstant und gleichmäßig eingestellt. Dabei sind maximale Temperaturabweichungen von z.B. 2°K oder 1°K über die gesamte Folienranddicke möglich.

Eine bevorzugte Meßvorrichtung zur entsprechenden Einstellung des gewünschten Temperaturverlaufes auch im Folienrandbereich zeichnet sich unter Verwendung eines Pyrometers aus, dessen Einstellzeit so groß ist, daß der Wechsel von vorbeifahrenden Kluppen und Folie nicht zu einer Signalschwankung führt. Wird ferner eine Temperaturmessung, -bestimmung oder -vorgabe der Kluppe berücksichtigt, so kann aus diesen Daten letztlich die Randstreifentemperatur vergleichsweise exakt ermittelt werden, die dann wieder als Ausgangssteuerungsgröße zur Ansteuerung der Heizeinrichtung dienen kann.

Die Erfindung wird nachfolgend anhand von Ausführungsbeispielen unter Bezugnahme auf mehrere Zeichnungen erläutert. Dabei zeigen im einzelnen:
- Figur 1 :: eine schematische Draufsicht auf eine Simultanreckanlage;
- Figur 2 :: eine schematische Querschnittsdarstellung durch eine Kluppenbahn benachbart zu einem Folienrand;
- Figur 3a :: ein Diagramm zur Verdeutlichung des Temperaturverlaufes im Folienrand;
- Figur 3b :: einen schematischen Querschnitt durch eine Kunststoffolie im Randbereich;
- Figur 4 :: eine schematische Darstellung zur Messung der Temperatur im Folienrandbereich;
- Figur 5 :: eine schematische optische Wiedergabe zur Ermittlung der Folientemperatur im Randbereich; und
- Figuren 6.1 bis 6.4 :: verschiedene Temperaturverläufe in der Folie bzw. im Folienrand.

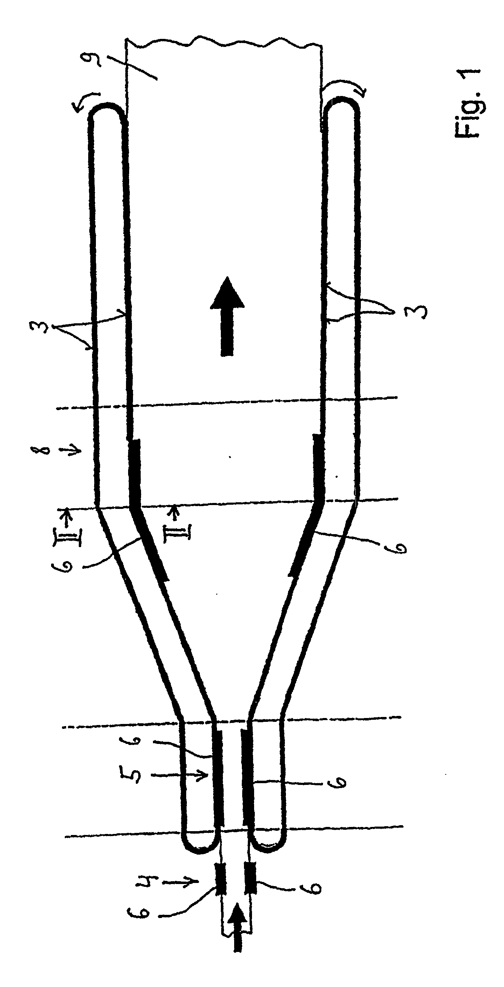

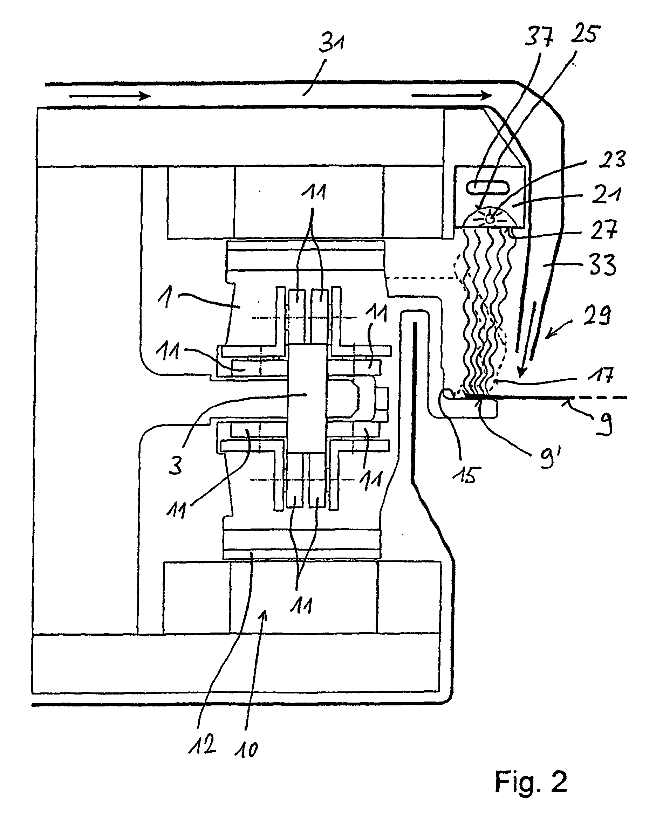

In der schematischen Draufsicht gemäß Figur 1 ist eine Simultanreckanlage zur Herstellung von Kunststoffolienbahnen gezeigt, bei welcher bekanntermaßen eine Kunststoffbahn mit vergleichsweise geringer Breite von einem nicht näher dargestellten Extruder kommend über eine zwischengeschaltete, ebenfalls nicht wiedergegebene Kühltrommel-Anordnung im Eingangsbereich der Simultanreckanlage an ihren beiden Rändern mittels sogenannten Kluppen erfaßt wird. Die in Figur 2 gezeigten Kluppen oder Kluppenwagen 1 werden dabei z.B. mittels eines Linearmotorantriebes auf den beiden seitlich umlaufenden Bahnen 3 verfahren. Die Kunststoffbahn 9 wird dabei beispielsweise in einer sogenannten Einlaufzone 4, einer nachfolgenden Vorheizzone 5 bei noch gleichbleibender Kunststoffolienbahnbreite, und in einer nachfolgenden Sirriultan-Reckzone 7 sowie einer weiteren nachfolgenden Nachstreckzone 8 entsprechend temperiert bzw. aufgeheizt, wobei entsprechende Folienrand-Heizeinrichtungen in Figur 1 mit Bezugszeichen 6 wiedergegeben sind. Ferner kann sich an die sogenannte Temperzone auch noch eine Nachstreckzone, eine sogenannte Relaxations- und/oder Kühlzone anschließen, bei denen die Kunststoffolienbreite im wesentlichen gleichbleibend gehalten oder gegenüber der maximalen Kunststoffolienbahnbreite am Ende der Simultan-Reckzone 7 geringfügig schmäler eingestellt werden kann. Am Ende der in Figur 1 wiedergegebenen Reckanlage wird die Kunststoffolienbahn 9 dann durch Öffnen der Kluppen freigegeben und über diverse Abzugsrollen weiterbefördert.

In Figur 2 ist ein schematischer Querschnitt beispielsweise längs der Linie II-II in Figur 1 gezeigt, welcher in schematischer Form wiedergibt, daß auf einer im Querschnitt rechteckförmigen Umlaufbahn 3 Kluppen bzw. Kluppenwagen 1 beispielsweise über einen Linearmotorantrieb angetrieben werden, wobei die Kluppenwagen über eine Vielzahl von Laufrollen 11 auf den gegenüberliegenden horizontalen wie vertikalen Lauflächen 13 an den Schienen 3 ablaufen können und gehalten werden. Die Magnetspulen 10 für den Linearmotorantrieb können beispielsweise jeweils ortsfest längs der Schienenbahn 3 angeordnet sein, wobei durch einen geringen Abstandsspalt davon getrennt Platten mit Permanentmagneten 12 an den Kluppen ausgebildet sind.

Am Kluppentisch 15 ist in bekannter Weise der Folienrand 9' der Kunststoffolienbahn 9 eingespannt, und zwar mittels eines verschwenkbar gehaltenen und in Verschlußstellung gebrachten Kluppenhebels 17, der in Figur 2 lediglich strichpunktiert dargestellt ist.

Im gezeigten Ausführungsbeispiel sind in Querschnittsdarstellung über dem Folienrand 9' und dabei auch noch über dem oberen Ende der verschwenkbaren Kluppenhebel 17 selbst, jeweils in den Aufheizzonen der Kunststoffolienbahn Infrarot-Strahler 21 untergebracht. Die Strahlerquelle 23 ist dabei auf der der Folie abweisenden Seite, also im gezeigten Ausführungsbeispiel obenliegend, mit einem Reflektor 25 ausgestattet, der konkav gestaltet ist, d.h. im Querschnitt vorzugsweise parabolähnlich geformt ist, wodurch eine Bündelung und Fokussierung der Infrarotstrahlen in Richtung Folienrand 9' erzielt werden kann.

Als Schutz der Reflektoroberfläche und der Strahlerquelle selbst kann die Unterseite des so gebildeten Infrarot-Strahlers 21 auch mit einer Schutzscheibe, beispielsweise einer Glasscheibe 27 abgedeckt sein. Zur besseren Fokussierung können auch Linsen 27 oder Blenden eingesetzt werden. Auf der Unterseite des Folienrandes können ferner Spiegelreflektoren angeordnet werden.

Ferner ist für die Aufheizung des Folienrandes 9' zudem eine Heißluft-Aufheiz- oder -Tempereinrichtung vorgesehen. Diese umfaßt einen oberhalb der jeweiligen Schiene 3 verlegten Heißluft-Zuführkanal 31, der in einen vertikalen Heißluftkanal 33 übergeht, und dessen parallel zur Kluppenschienenbahn 3 im Aufheizbereich verlaufende Schlitzdüse ebenfalls auf den Folienrand 9' ausgerichtet ist.

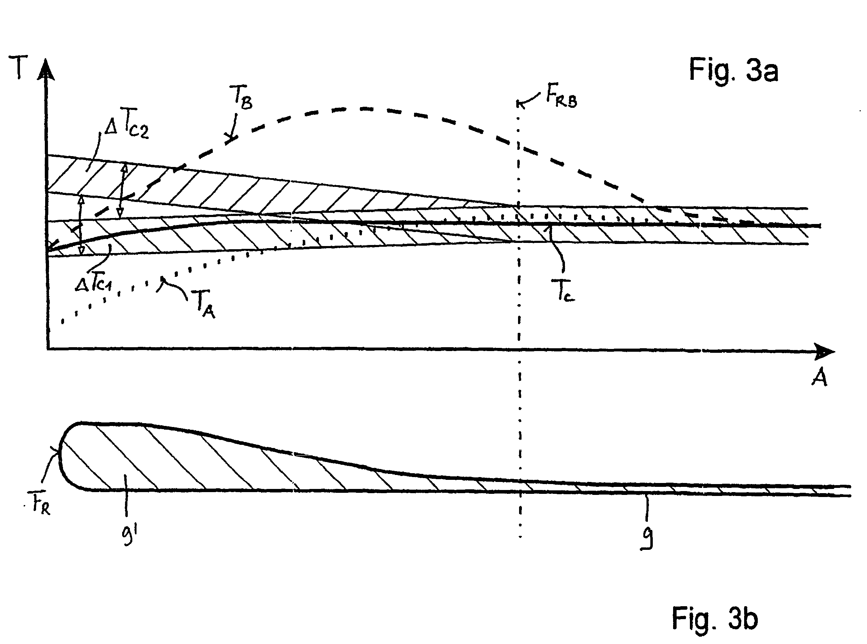

In Figur 3b ist schematisch in vergrößerter Querschnitts-Darstellung ein unterschiedlicher Foliendickenverlauf vor allem im Randbereich wiedergegeben, der gemäß Figuren 3a und 3b bis etwa F_{RB} reicht. Auf der X-Achse ist dabei der Abstand A vom äußersten Folienrand F_{R} wiedergegeben. Daraus ist ersichtlich, daß die beispielsweise bei einer Kunststoffendfolie hergestellte Foliendicke - die sich in einem µ-Bereich bewegen kann - in und vor der Reckzone im Folienrandbereich 9' um ein Vielfaches dicker ist.

In Figur 3a ist dabei der erzielbare Temperaturverlauf T auch im Folienrandbereich wiedergegeben, wobei punktiert angedeutet ist, welcher Temperaturverlauf T_{A} lediglich bei Verwendung einer Heißluftaufheizeinrichtung, und strichliniert wiedergegeben ist, welcher Temperaturverlauf T_{B} lediglich bei Verwendung eines Infrarot-Strahlers erzielbar wäre.

Die durchgezogene Linie T_{C} gibt den tatsächlich einstellbaren Temperaturverlauf wieder, wenn sowohl ein Infrarot-Strahler als auch eine Konvektionserwärmung unter Verwendung einer Heißluft-Heizeinrichtung verwendet wird. In diesem Falle wird Heißluft, mit der der Folienrand beaufschlagt wird, auf eine Temperatur geringfügig niedriger als die eigentliche Prozeßtemperatur eingestellt. Unter der Prozeßtemperatur von beispielsweise 93°C wird jene Temperatur verstanden, auf die die Kunststoffolienbahn insgesamt, insbesondere während des simultanen Reckvorganges, eingestellt werden soll. Durch die geringfügig niedriger gewählte Temperatur für die Heißluftbeaufschlagung wird ein Ausgleich dafür geschaffen, daß sich mittels der Infrarot-Bestrahlung an sich eine etwas oberhalb der Prozeßtemperatur T_{P} liegende Temperatur im Folienrandbereich einstellen würde.

Dabei kann durch geringfügige Veränderungen beispielsweise der Temperatur der Heißluft als auch durch geringfügige Änderungen der von dem Infrarot-Strahler abgegebenen Energie der Temperaturverlaufbereich im Folienrandbereich je nach gewünschten Bedingungen unterschiedlich eingestellt werden, beispielsweise derart, daß sich der gewünschte Temperaturverlauf T_{C} im Folienrandbereich in dem Temperaturband ΔT_{C1} oder in dem Temperaturbereich ΔT_{C2} bewegt. D.h. der Temperaturbereich ΔT kann zum äußersten Folienrand F_{R} leicht ansteigend, beispielsweise horizontal gleichbleibend oder sogar leicht abfallend eingestellt werden. Geringfügige Temperaturschwankungen innerhalb der eingezeichneten Temperaturbänder ΔT in Figur 3a sind unbeachtlich, da diese Schwankungen nur höchst gering sind und keine nachteiligen Effekte mit sich bringen.

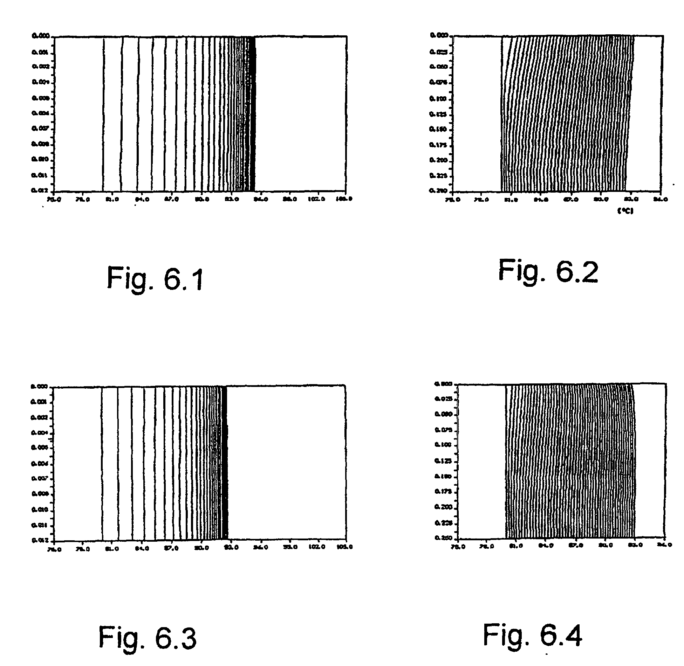

Die sich einstellenden Temperaturverhältnisse wurden simuliert und sind anhand der Figuren 6.1 bis 6.4 dargestellt.

Dabei gibt das Diagramm gemäß Figur 6.1 die Verhältnisse wieder, wenn die Folie in die Heizzone gelangt. Hat die Folie beispielsweise vor Erreichen der Heizeinrichtung eine Starttemperatur von ca. 80°C, so erhöht sich die Temperatur in kurzen Zeitintervallen von beispielsweise 0,1 Sekunden. Mit anderen Worten steigt die Temperatur bis zu einem Wert von etwa 95°C an (auf der X-Achse sind die Temperaturwerte angegeben), wobei sich dieser Temperaturwert praktisch über die gesamte Dicke der Folie einstellt. Dabei ist in Figur 6.1 die Foliendicke im Querschnitt wiedergegeben, wobei die Folienoberseite mit 0,0 µm obenliegend und die Folienunterseite mit 0,012 µm unteniegend wiedergegeben ist. Diese Foliendicke liegt benachbart zu dem verdickten Randbereich am Übergang zum dünnen Folienquerschnitt vor (beispielsweise an der Stelle F_{RB} in Figur 3b).

In Figur 6.2 ist der Temperatur-Verlauf im verdickten Folienrand wiedergegeben (wobei auch hier die Folienoberseite oben mit 0,0 µm und die Folienunterseite unten mit 0,25 µm wiedergegeben ist). Hier stellt sich auf der Folienoberseite eine geringfügig höhere Temperatur ein, wohingegen auf der Folienunterseite die Temperatur unter 93°C liegt.

Die Verhältnisse gemäß Figuren 6.1 und 6.2 liegen dann vor, wenn neben der Infrarotbestrahlung Luft mit einer Prozeßtemperatur von beispielsweise 93°C auf den Folienrand geblasen wird.

Wird, wie in den Figuren 6.3 und 6.4 dargestellt ist, der Folienrand mit einer Prozeßtemperatur von beispielsweise 90°C beblasen, so zeigt sich, daß sich sowohl am verdickten Abschnitt des Folienrandes (Figur 6.4) als auch am Übergangsbereich zu dem dünneren Folienabschnitt in dem mittleren Folienbereich über die gesamte Foliendicke fast gleichbleibend die erwünschte Prozeßtemperatur von 93°C einstellt.

Entsprechende an sich bekannte Aufheizvorrichtungen zur Erwärmung des verbleibenden mittleren Folienmaterialabschnittes, insbesondere unter Verwendung von Heißluft, sind in den Figuren zu dem gezeigten Ausführungsbeispiel nicht näher dargestellt.

Die Wellenlänge des Infrarot-Strahlers kann in weiten Bereichen entsprechend gewählt werden. Kurzwellige Strahler mit einer Wellenlänge von etwa 1,1 µm haben den Vorteil, daß sie eine Energieeinleitung in tiefere Folienrandschichten ermöglichen, da Luft vor allem die Oberfläche des Folienrandes aufheizt. Durch die erwähnte gebündelte Strahlung und die dadurch bewirkte Fokussierung lassen sich die Randbereiche gezielt mit einem vorbestimmten Energiequerschnitt bestrahlen und aufheizen. Bei Bedarf können die Infrarot-Strahler ferner noch durch eine integrierte Wasserkühlung gekühlt werden, um hohe Leistung auf kleinem Raum zu erzeugen und abzustrahlen (in der Zeichnung ist im Infrarot-Strahler eine integrierte Kühlungsleitung mit 37 bezeichnet).

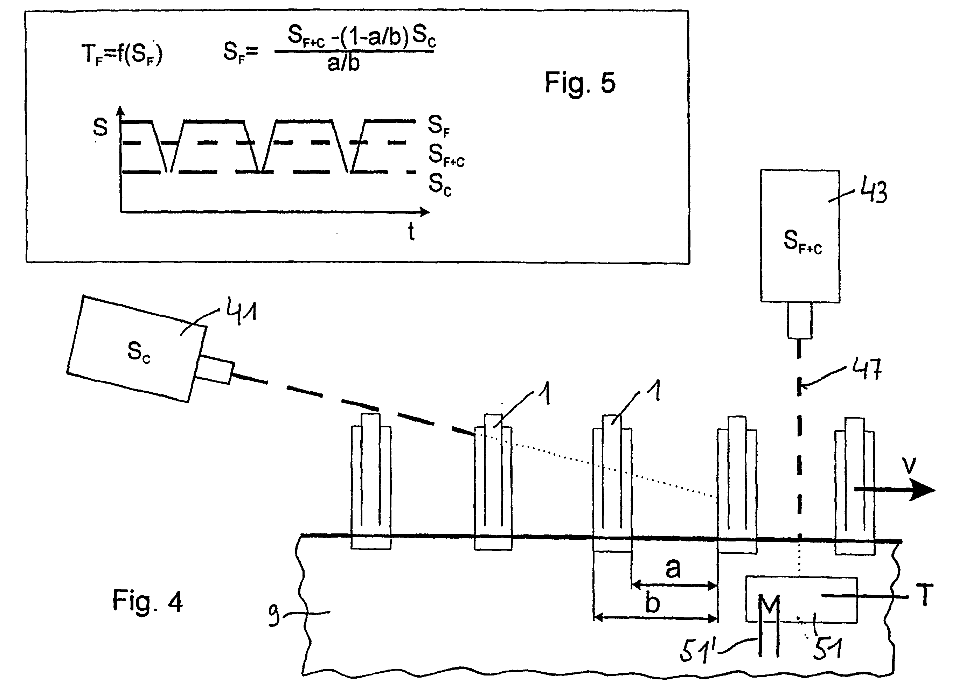

Nachfolgend wird auf die Figuren 4 und 5 Bezug genommen, anhand derer eine Temperaturmeßeinrichtung erläutert wird, um anhand der ermittelten Folienrand-Temperatur die vorstehend erläuterte Folienrand-Aufheizeinrichtungen zielgerichtet anzusteuern und zu betreiben.

Zur Einstellung und Steuerung des gewünschten optimierten Temperaturverlaufs auch im Randbereich ist es erforderlich, daß die Randtemperatur der Folie gemessen wird. Die Folienränder werden allerdings je nach Reckverhältnis in gewissen Abständen durch die erwähnten Kluppen gehalten, wobei die Temperatur zwischen diesen Kluppen für den Prozeß der Simultanverstreckung relevant ist, und dabei allerdings durch die Kluppentemperatur selbst eine Verfälschung des Meßergebnisses verursacht werden kann.

Da also eine genaue Messung der Temperatur des Folienrandes während des Anlagenbetriebes, d.h. während des permanenten Umlaufs der Kluppen nicht direkt möglich ist, wird eine berührungslose Messung mittels Pyrometer vorgeschlagen. Eine berührungslose Messung mittels eines Pyrometers ergibt dabei aber noch nicht die gewünschte Abtastgeschwindigkeit bei der nötigen schmalen Bandbreite des Detektors oder liefert nicht die gewünschte Genauigkeit aufgrund einer zu langsamen Erfassung der Temperatur. Somit wird letztlich lediglich ein verfälschtes Mischsignal gemessen, in welches die Temperatur der vorbeifahrenden Kluppen 1 und im verbleibenden Kluppenabstand a (Fig. 4) zwischen zwei benachbarten Kluppen 1 die Temperatur des Folienrandes 9' eingehen.

Von daher wird eine Folienrandtemperatur-Messung und -Messungsanordnung unter Verwendung zumindest zweier Pyrometer-Anordnungen 41, 43 vorgeschlagen.

Mittels einer ersten Pyrometer-Anordnung 41 wird lediglich die Kluppentemperatur mit einem breitbandigen langsamen Pyrometer (also mit langer Ansprechzeit) so gemessen, daß ständig mindestens eine Kluppe 1 detektiert wird. Dies kann entsprechend der schematischen Darstellung gemäß Figur 4 dadurch gewährleistet werden, daß die Detektionsrichtung 45 der ersten Pyrometer-Anordnung 41 mit tangentialer Komponente zum Folienrand 9' und damit zu dem betreffenden Schienenabschnitt 3, auf dem die Kluppen 1 längs verfahren werden, ausgerichtet ist.

Über die zweite Pyrometer-Anordnung 43 wird eine Mischtemperatur mit einem schmalbandigen, auf den betreffenden Folientyp ausgelegten Pyrometer mit langer Ansprechzeit gemessen, dessen Einstellzeit so groß ist, daß der Wechsel von vorbeifahrenden Kluppen 1 und der Folie 9 bzw. des Folienrandes 9' nicht zu einer Signalschwankung führt. Die zweite Pyrometer-Anordnung 43 ist im gezeigten Ausführungsbeispiel rechtwinklig zum Folienrand 9', d.h. in der Regel im wesentlichen quer oder rechtwinklig zur Folienbahnebene ausgerichtet, wobei die Detektionsrichtung 47 auf den jeweils vorbeibewegten Folienrand 9' ausgerichtet ist, und hier in dem Induktionsbereich auch die Kluppen 1 hindurchbewegt werden.

Ein Signal S_{c} für die Kluppentemperatur (gemessen durch die erste Pyrometer-Anordnung 41) und ein Mischsignal S_{F+C} für die aus der Folientemperatur und der Kluppentemperatur bestehende Mischtemperatur ist schematisch in Figur 5 wiedergegeben.

Mittels einer nicht näher dargestellten elektronischen Zentralsteuerung und Auswerteinrichtung, insbesondere unter Verwendung einer Mikroprozessorschaltungsanordnung, läßt sich während der Produktion kontinuierlich und berührungslos die eigentliche Folientemperatur S_{F} ermitteln, wie sie graphisch in Figur 5 wiedergegeben ist (wobei die Folienrandtemperatur immer im Bereich der Kluppe auf die Kluppentemperatur absinkt und dazwischen schnell wieder auf die eigentliche Folientemperatur S_{F} ansteigt). In Figur 5 sind die ermittelten Signalgrößen S über der Zeitachse t aufgetragen und die Formeln für die Abhängigkeit der Folientemperatur T_{F} wiedergegeben.

In der Auswert- und Steuerungsanlage kann dabei die tatsächliche Folien- bzw. Folienrand-Temperatur ferner unter Berücksichtigung der aktuellen Geometrieverhältnisse (Kluppengröße, Kluppenabstand a, Kluppenfolge b etc.) und einem Korrekturfaktor ermittelt und auf die Temperatur des Randstreifens umgerechnet werden.

Schließlich ist auch noch eine Kalibrierung der Pyrometer 41, 43 möglich. Wenn die Simultanreckanlage ohne Folie läuft, kann eine in Figur 4 wiedergegebene Kalibrierplatte 51 mit einer automatischen Kalibriersequenz aufgeheizt werden, wobei in der Platte ein Meßfühler 51' integriert ist und die gemessene Temperatur überwacht wird. Die Kalibrierplatte 51 liegt dabei im Detektorbereich 47 der zweiten Pyrometer-Anordnung 43. Dabei wird die mit dem Pyrometer 43 gemessene Temperatur mit der von dem der Kalibrierplatte 51 zugeordneten Meßfühler 51' gemessenen Temperatur verglichen und ein entsprechend später in die Auswertung eingehender Korrekturfaktor ermittelt.

Über die so kalibrierte Randstreifen-Temperaturmessung können dann die Infrarot-Strahler und/oder die Heißluft-Heizeinrichtung gesteuert werden.

Die Genauigkeit der Messung kann dadurch erhöht werden, daß ein definierter Hintergrund als schwarzer Strahler geschaffen wird, der sowohl während der Messung zu einem definierten Hintergrund mit konstanter Temperatur führt, d.h. die transmittierte Hintergrundstrahlung definiert, zum anderen zur Kalibrierung des Systems während Leerlaufphasen der Maschine genutzt werden kann (Black Plates).

Die Kombination der gezielten Beeinflussung über Strahlung und Heißluft mit der Randstreifentemperaturmessung kann als geschlossener Regelkreis für eine exakte Einstellung der Randstreifentemperatur genutzt werden.

Die erläuterte Randstreifenheizung für Simultan-Reckanlagen kann an unterschiedlichen Anlagenabschnitten eingebaut und eingesetzt werden, so beispielsweise bereits in der Einlaufzone 4, in der Vorheizzone 5, in der Simultanreckzone 7 aber auch in der Nachreckzone 8, wie dies mit Bezugszeichen 6 schematisch in Figur 1 wiedergegeben ist.

Die Ausführungsbeispiele sind für den Fall erläutert worden, daß die Infrarotbestrahlung und die Heißluft-Beaufschlagung jeweils gleichzeitig durchgeführt wird. D.h. insoweit, daß an entsprechenden Aufheizabschnitten 6 jeweils eine doppelte Aufheizungs-Einrichtung vorgesehen ist, nämlich Infrarot-Strahler sowie eine Heißluft-Heizeinrichtung bzw. Heißluft-Abgabedüsen. Es sind aber durchaus Einsatzfälle denkbar, bei denen die Erwärmung des Folienrandes mittels Infrarotstrahler und mittels Heißluft nicht stets oder ausschließlich nur gleichzeitig, d.h. gleichzeitig bezogen auf einen bestimmten Abschnitt des Folienrandes erfolgen muß. Ferner kann vielmehr vorgesehen sein, daß während der Vorwärtsbewegung der zu behandelnden Folienbahn an der Anlage zusätzliche Anlagenabschnitte vorgesehen sind, bei denen ergänzend nur eine InfrarotErwärmung oder nur eine Heißluft-Beaufschlagung durchgeführt wird. Somit ist auch denkbar, daß die erläuterte doppelte Aufheizung in Längsrichtung der Anlage zumindest teilweise versetzt erfolgt, so daß sich die Anlagenstrecke für die Infrarot-Aufheizung und die Anlagenstrecke für die Heißluft-Beaufschlagung nur abschnittsweise überdeckt, so daß in diesen sich überdeckenden Abschnitten gleichzeitig die erwähnte Infrarot-Bestrahlung und Heißluft-Beaufschlagung und in den sich nicht überdeckenden Abschnitten lediglich nur eine Infrarot-Bestrahlung oder nur eine Heißluft-Beaufschlagung stattfindet.

Auch wenn das Ausführungsbeispiel bezüglich Heißluft-Aufheizeinrichtung für den Fall erläutert wurde, daß erwärmte Luft der Folienbahn bzw. dem Folienrand zugeführt wird, so wird unter dem Begriff "Luft" jedoch jedes geeignete Gasgemisch verstanden, das hierfür verwendet werden kann.

## Patentansprüche

1. Verfahren zur Folienaufheizung oder -temperierung bei Kunststoffolien-Reckprozessen, mit den folgenden Merkmalen
- mit einer konvektiven Erwärmung der Kunststoffolienbahn (9) mittels erwärmter Luft, und/oder
- mit einer Infrarot-Bestrahlung zur Erwärmung der Folie mittels Infrarotstrahlen, und
- neben der Folienaufheizung oder -temperierung im mittleren Folienbereich werden die Folienränder (9') separat einstell- oder ansteuerbar aufgeheizt oder temperiert,
**gekennzeichnet durch** die folgenden weiteren Merkmale
- die Folienrandaufheizung oder -temperierung erfolgt kombiniert mittels Infrarotstrahlen und mittels Heißluft, und
- die Infrarotbestrahlung und die Heißluftbeaufschlagung im Folienrandbereich (9') erfolgt im Sinne einer Verringerung einer Temperaturabweichung von einer Soll-Prozeßtemperatur.

2. Verfahren nach Anspruch 1, **dadurch gekennzeichnet, daß** die Heißluft der Heißluft-Aufheizeinrichtung (29) auf eine Temperatur erwärmt wird, die unterhalb einer Prozeß- oder Foliensolltemperatur eingestellt wird.

3. Verfahren nach Anspruch 1 oder 2, **dadurch gekennzeichnet, daß** die Infrarotbestrahlung des Folienrandbereiches (9') vorzugsweise durch Fokussierung gebündelt erfolgt.

4. Verfahren nach einem der Ansprüche 1 bis 3, **dadurch gekennzeichnet, daß** die Infrarot-Strahler (21) gekühlt, vorzugsweise mittels Wasser gekühlt werden.

5. Verfahren nach einem der Ansprüche 1 bis 4, **dadurch gekennzeichnet, daß** die Infrarotbestrahlung und/oder die Heißluftbeaufschlagung geregelt mit einer elektronischen Regelungsanlage erfolgt, und zwar in Abhängigkeit einer gemessenen oder ermittelten Folientemperatur, insbesondere Folienrandtemperatur.

6. Verfahren nach Anspruch 5, **dadurch gekennzeichnet, daß** die Folienrandtemperaturmessung oder -bestimmung indirekt durch Messung einer Mischtemperatur, die sich zum einen aus den Temperaturwerten der vorbeifahrenden Kluppenwagen (1) und zum anderen der tatsächlich gemessenen Folienrandtemperatur zwischen den Kluppenwagen (1) zusammensetzt, und durch alleinige Messung der Kluppentemperaturen erfolgt, wobei aus diesen beiden Signalen für die Mischtemperatur und die Kluppentemperatur die Folientemperatur gegebenenfalls unter Berücksichtigung weiterer Korrekturfaktoren ermittelt wird.

7. Verfahren nach einem der Ansprüche 1 bis 6, **dadurch gekennzeichnet, daß** als Meßeinrichtungen für die Temperaturmessung Pyrometer (41, 43) verwendet werden.

8. Verfahren nach einem der Ansprüche 1 bis 7, **dadurch gekennzeichnet, daß** neben der simultanen Erwärmung des Folienrandes durch Infrarot-Bestrahlung und Heißluft-Beaufschlagung bezogen auf einen gleichen Folienrand-Abschnitt eine weitere Folienaufheizung durchgeführt wird, bei der ergänzend nur eine Infrarotbestrahlung oder nur eine Heißluftbeaufschlagung durchgeführt wird.

9. Vorrichtung zur Folienaufheizung oder -temperierung bei Kunststoffolien-Reckprozessen, mit den folgenden Merkmalen
- mit einer Heißluft-Aufheizeinrichtung (29) zur Beaufschlagung der Kunststoffolie (9) mit Heißluft, und/oder
- mit einer Infrarotstrahler-Einrichtung (21) zur Bestrahlung der Kunststoffolie (9) mittels IR-Strahlen, und
- es ist eine separate Einrichtung zur Folienrandaufheizung vorgesehen,
**gekennzeichnet durch** die folgenden weiteren Merkmale
- die Einrichtung zur Folienrandaufheizung umfaßt eine Infrarotstrahler-Einrichtung (21) und eine Heißluft-Aufheizeinrichtung (29), und
- die Infrarotstrahler-Einrichtung (21) und/oder die Heißluft-Heizeinrichtung (29) sind auf unterschiedliche Werte für die Heizleistung ansteuer- oder einstellbar.

10. Vorrichtung nach Anspruch 9, **dadurch gekennzeichnet, daß** die Infrarotstrahler-Einrichtung (21) mittels einer Fokusiereinrichtung, vorzugsweise in Form eines Hohlreflektors oder Parabolspiegels versehen ist.

11. Vorrichtung nach Anspruch 9 oder 10, **dadurch gekennzeichnet, daß** die Infrarot-Strahler (21) mit einer integrierten Kühleinrichtung, vorzugsweise mit Wasserkühlleitungen (37) versehen sind.

12. Vorrichtung nach einem der Ansprüche 9 bis 11, **dadurch gekennzeichnet, daß** die Infrarot-Strahler-Einrichtungen (21) so angeordnet sind, daß im wesentlichen unter diesen die Kluppentische (17) der fortbewegten Kluppen (1) verfahren werden.

13. Vorrichtung nach einem der Ansprüche 9 bis 12, **dadurch gekennzeichnet, daß** die Infrarot-Strahler-Einrichtungen (21) im wesentlichen parallel zu den für die Fortbewegung der Kluppen (1) dienenden Schienen (3) und oberhalb des Folienrandes (9') sowie oberhalb der Obergrenze des Einzugsbereichs der Kluppenhebel (17) angeordnet sind.

14. Vorrichtung nach einem der Ansprüche 9 bis 13, **dadurch gekennzeichnet, daß** die Heißluft-Aufheizeinrichtung (33) in den Aufheizzonen mit einer im wesentlichen parallel und auf den fortbewegten Folienrand (9') ausgerichteten Düse, insbesondere Schlitzdüse (35) versehen ist, die im wesentlichen auf den Folienrand (9') ausgerichtet ist.

15. Vorrichtung nach Anspruch 13 oder 14, **dadurch gekennzeichnet, daß** der Heißluftkanal (31, 33) der Heißluft-Aufheizeinrichtung (33) die Infrarot-Strahler-Einrichtung (21) so übergreift, daß die Austrittdüse (35) der Heißluft-Aufheizeinrichtung gegenüber dem Infrarotstrahlungsbereich in Richtung Kunststoffolienmitte versetzt liegt.

16. Vorrichtung nach einem der Ansprüche 9 bis 15, **dadurch gekennzeichnet, daß** die Infrarot-Strahler-Einrichtungen (21) mit einer Wellenlänge von 0,1 bis 10 µm, vorzugsweise um 0,5 bis 3 µm strahlen.

17. Vorrichtung nach einem der Ansprüche 9 bis 16, **dadurch gekennzeichnet, daß** neben Anlagenabschnitten zur gleichzeitigen Erwärmung des Folienrandes durch Infrarot-Strahler und Heißluft-Heizeinrichtungen oder -Düsen Anlagenabschnitte vorgesehen sind, die nur eine Infrarot-Strahler-Einrichtung (21) oder nur eine Heißluft-Aufheizeinrichtung (33) umfassen.

18. Vorrichtung nach einem der Ansprüche 9 bis 17, wobei eine Meßeinrichtung zur Messung der Folientemperatur, insbesondere der Folienrandtemperatur mittels Pyrometer (41, 43), vorgesehen ist **dadurch gekennzeichnet, daß** eine Pyrometer-Anordnung (41, 43) im wesentlichen auf den Folienrand (9') ausgerichtet ist, und daß darüber ein Signal (S_{F+C}) bezüglich einer Mischtemperatur ermittelbar ist, die sich aus der während des Meßzyklusses ergebenden Messung der Kluppentemperatur (S_{C}) und der Folienrandtemperatur (S_{F}) in dem Abstand (a) zwischen zwei benachbarten Kluppen (1) ergibt.

19. Vorrichtung nach Anspruch 18, **dadurch gekennzeichnet, daß** das Pyrometer (43) aus einem schmalbandigen Pyrometer (43) besteht, dessen Einstellzeit so groß ist, daß der Wechsel von vorbeifahrenden Kluppen (1) und dem zwischen zwei Kluppen (1) detektierbaren Folienrand (9') signalschwankungsfrei oder im wesentlichen signalschwankungsfrei durchführbar ist.

20. Vorrichtung nach Anspruch 18 oder 19, **dadurch gekennzeichnet, daß** zumindest eine weitere Pyrometer-Anordnung (41) vorgesehen ist, worüber lediglich die Kluppentemperatur (S_{C}) ermittelbar ist.

21. Vorrichtung nach Anspruch 20, **dadurch gekennzeichnet, daß** die Detektionsrichtung (45) der zur Messung der Kluppentemperatur vorgesehenen Pyrometer-Anordnung (41) mit tangentialer Komponente zum Folienrand (9') so ausgerichtet ist, daß sich jeweils zumindest eine Kluppe (1) in deren Detektionsbereich befindet und die Folie bzw. der Folienrand (9, 9') im wesentlichen oder ganz abgeschirmt ist.

22. Vorrichtung nach einem der Ansprüche 18 bis 21, **dadurch gekennzeichnet, daß** aus dem gemessenen Signal (S_{C}) für die Kluppentemperatur und dem Mischsignal (S_{F+C}) für die Mischtemperatur mittels einer elektronischen Auswertund/oder Steuerungseinrichtung die Folientemperatur (S_{F}) ermittelbar ist, mit der vorzugsweise die Folienrand-Heizeinrichtung (29) ansteuerbar ist.

23. Vorrichtung nach einem der Ansprüche 18 bis 22, **dadurch gekennzeichnet, daß** eine Kalibriereinrichtung vorgesehen ist, die eine im Strahlungsbereich der Infrarot-Strahler-Einrichtungen (21) liegende Kalibrierplatte (51) mit zugeordneten Meßfühler (51') zur Messung der Temperatur aufweist, und daß eine Auswertelektronik vorgesehen ist, mittels der aus dem Vergleich der von dem Meßfühler (51') gemessenen Temperatur der Kalibrierplatte (51) mit der von dem Pyrometer (43) gemessenen Temperatur ein Korrektur- oder Eichfaktor zur Bestimmung der tatsächlichen Folien- und/oder Folienrandtemperatur (9, 9') herleitbar ist.

## Claims

1. Method for the heating or thermal control of film in plastic film stretching processes, having the following features
- with convective heating of the plastic film web (9) by means of heated air, and/or
- with infrared irradiation for heating the film by means of infrared rays, and
- in addition to the heating or thermal control of the film in the middle film region, the film edges (9') are heated or thermally controlled so as to be separately capable of being set or activated,
**characterized by** the following further features
- the heating or thermal control of the film edge takes place in a combined manner by means of infrared rays and by means of hot air, and
- infrared irradiation and hot-air action in the film edge region (9') take place with the effect of reducing a temperature deviation from a desired process temperature.

2. Method according to claim 1, **characterized in that** the hot air of the hot-air heating device (29) is heated to a temperature which is set below a desired process temperature or desired film temperature.

3. Method according to claim 1 or 2, **characterized in that** the infrared irradiation of the film edge region (9') preferably takes place in a concentrated manner by focusing.

4. Method according to one of claims 1 to 3, **characterized in that** the infrared radiators (21) are cooled, preferably cooled by means of water.

5. Method according to one of claims 1 to 4, **characterized in that** the infrared irradiation and/or hot-air action takes place in a regulated manner by means of an electronic regulating system, specifically in dependence on a measured or determined film temperature, in particular the film edge temperature.

6. Method according to claim 5, **characterized in that** the measurement or determination of the film edge temperature is carried out indirectly by the measurement of a mixed temperature, which is composed, on the one hand, of the temperature values of the tenterhook carriages (1) moving past and, on the other hand, of the film edge temperature actually measured between the tenterhook carriages (1), and by the sole measurement of the tenterhook temperatures, the film temperature being determined from these two signals for the mixed temperature and the tenterhook temperature, if appropriate taking into account further correcting factors.

7. Method according to one of claims 1 to 6, **characterized in that** pyrometers (41, 43) are used as measuring devices for temperature measurement.

8. Method according to one of claims 1 to 7, **characterized in that**, in addition to the simultaneous heating of the film edge by infrared irradiation and hot-air action in respect of the same film edge portion, further film heating is carried out, in which only infrared irradiation or only hot-air action is additionally carried out.

9. Apparatus for the heating or thermal control of film in plastic film stretching processes, having the following features
- with a hot-air heating device (29) for subjecting the plastic film (9) to hot air, and/or
- with an infrared radiator device (21) for irradiating the plastic film (9) by means of IR rays, and
- a separate device for heating the film edge is provided,
**characterized by** the following further features
- the device for heating the film edge comprises an infrared radiator device (21) and a hot-air heating device (29), and
- the infrared radiator device (21) and/or the hot-air heating device (29) can be activated or set to different values for the heating output.

10. Apparatus according to claim 9, **characterized in that** the infrared radiator device (21) is provided by means of [sic] a focusing device, preferably in the form of a hollow reflector or parabolic mirror.

11. Apparatus according to claim 9 or 10, **characterized in that** the infrared radiators (21) are provided with an integrated cooling device, preferably with water cooling lines (37).

12. Apparatus according to one of claims 9 to 11, **characterized in that** the infrared radiator devices (21) are arranged in such a way that the tenterhook tables (17) of the advanced tenterhooks (1) are moved essentially below said devices.

13. Apparatus according to one of claims 9 to 12, **characterized in that** the infrared radiator devices (21) are arranged essentially parallel to the rails (3) serving for the advance of the tenterhooks (1) and above the film edge (9') as well as above the upper limit of the region covered by the tenterhook levers (17).

14. Apparatus according to one of claims 9 to 13, **characterized in that** the hot-air heating device (33) is provided, in the heating zones, with a nozzle aligned essentially parallel to and with the advanced film edge (9'), in particular a slit nozzle (35) which is aligned essentially with the film edge (9').

15. Apparatus according to claim 13 or 14, **characterized in that** the hot-air duct (31, 33) of the hot-air heating device (33) reaches over the infrared radiator device (21) in such a way that the outlet nozzle (35) of the hot-air heating device is offset in the direction of the middle of the plastic film with respect to the infrared radiation region.

16. Apparatus according to one of claims 9 to 15, **characterized in that** the infrared radiator devices (21) radiate with a wavelength of 0.1 to 10 µm, preferably around 0.5 to 3 µm.

17. Apparatus according to one of claims 9 to 16, **characterized in that**, in addition to plant sections for the simultaneous heating of the film edge by means of infrared radiators and hot-air heating devices or nozzles, plant sections are provided, which comprise only one infrared radiator device (21) or only one hot-air heating device (33).

18. Apparatus according to one of the claims 9 to 17 whereby a measuring device for measuring the film temperature, in particular the film edge temperature, by means of pyrometers (41, 43) is provided, **characterized in that** a pyrometer arrangement (41, 43) is aligned essentially with the film edge (9'), and **in that** a signal (S_{F+C}) can be determined, via said pyrometer arrangement, with respect to a mixed temperature which is obtained from the measurement, occurring during the measuring cycle, of the tenterhook temperature (S_{C}) and the film edge temperature (S_{F}) in the interval (a) between two adjacent tenterhooks (1).

19. Apparatus according to claim 18, **characterized in that** the pyrometer (43) consists of a narrow-band pyrometer (43), the setting time of which is such that the interchange between tenterhooks (1) moving past and the film edge (9') detectable between two tenterhooks (1), can be carried out without any signal fluctuation or essentially without any signal fluctuation.

20. Apparatus according to claim 18 or 19, **characterized in that** at least one further pyrometer arrangement (41) is provided, via which only the tenterhook temperature (S_{C}) can be determined.

21. Apparatus according to claim 20, **characterized in that** the detection direction (45) of the pyrometer arrangement (41) provided for measuring the tenterhook temperature is oriented with a tangential component to the film edge (9'), in such a way that, in each case, at least one tenterhook (1) is located in the detection range of said pyrometer arrangement and the film or the film edge (9, 9') is essentially or completely shielded.

22. Apparatus according to one of claims 18 to 21, **characterized in that** the film temperature (S_{F}), at which preferably the film edge heating device (29) can be activated, can be determined by means of an electronic evaluation and/or control device from the measured signal (S_{C}) for the tenterhook temperature and the mixed signal (S_{F+C}) for the mixed temperature.

23. Apparatus according to one of claims 18 to 22, **characterized in that** a calibrating device is provided, which has a calibrating plate (51) located in the radiation range of the infrared radiator devices (21) and having associated measuring sensors (51') for measuring the temperature, and **in that** evaluation electronics are provided, by means of which a correcting or calibrating factor for determining the actual film temperature (9) and/or film edge temperature (9, 9') can be derived from a comparison of the temperature of the calibrating plate (51), measured by the measuring sensor (51'), with the temperature measured by the pyrometer (43).

## Revendications

1. Procédé pour chauffer ou tempérer des films lors d'opérations d'étirage de films en matière plastique, présentant les éléments suivants :
- un chauffage convectif de la bande de film en matière plastique (9) au moyen d'air chauffé, et/ou
- une irradiation à infrarouge pour chauffer le film au moyen de rayons infrarouges, et
- à côté du chauffage ou de la températion, du film dans la zone de film médiane, on chauffe ou on tempère les bords de film (9') avec faculté de réglage ou de pilotage séparé,
**caractérisé par** les autres éléments suivants :
- le chauffage ou la températion du bord de film s'effectue en combinaison au moyen de rayons infrarouges ou au moyen d'air chaud, et
- l'irradiation à infrarouge et l'attaque par air chaud dans la zone de bord de film (9') s'effectue dans le sens d'une réduction d'un écart de température par rapport à une température de consigne du processus.

2. Procédé selon la revendication 1, **caractérisé en ce que** l'air chaud du dispositif de chauffage à air chaud (29) est chauffé à une température qui est réglée au-dessous d'une température de consigne du processus ou du film.

3. Procédé selon l'une ou l'autre des revendications 1 et 2, **caractérisé en ce que** l'irradiation à infrarouge de la zone de bord de film (9') s'effectue de préférence de façon concentrée par focalisation.

4. Procédé selon l'une des revendications 1 à 3, **caractérisé en ce que** les dispositifs de rayonnement infrarouge (21) sont refroidis, de préférence à l'aide d'eau.

5. Procédé selon l'une des revendications 1 à 4, **caractérisé en ce que** l'irradiation à infrarouge et/ou l'attaque par air chaud s'effectue de façon régulée au moyen d'une installation de régulation électronique, et ceci en fonction d'une température de film mesurée ou déterminée, en particulier d'une température de bord de film.

6. Procédé selon la revendication 5, **caractérisé en ce que** la mesure ou la détermination de la température de bord de film s'effectue indirectement par mesure d'une température mixte qui se compose d'une part des valeurs de température des chariots à pinces (1) qui passent et d'autre part de la température de bord de film mesurée réellement entre les chariots à pinces (1), et par la seule mesure des températures des pinces, et à partir de ces deux signaux pour la température mixte et pour la température des pinces, on détermine la température du film, le cas échéant en prenant en compte d'autres facteurs de correction.

7. Procédé selon l'une des revendications 1 à 6, **caractérisé en ce que** pour mesurer la température, on utilise des pyromètres (41, 43) à titre de dispositifs de mesure.

8. Procédé selon l'une des revendications 1 à 7, **caractérisé en ce que** l'on effectue, par référence à un même tronçon de bord de film, à côté du chauffage simultané du bord de film par irradiation à infrarouge et par attaque par air chaud, un autre chauffage de film pendant lequel on effectue en complément uniquement une irradiation à infrarouge ou uniquement une attaque par air chaud.

9. Système pour chauffer ou tempérer des films lors d'opérations d'étirage de films en matière plastique, présentant les éléments suivants :
- un dispositif de chauffage à air chaud (29) pour attaquer le film en matière plastique (9) au moyen d'air chaud, et/ou
- un dispositif de rayonnement infrarouge (21) pour irradier le film en matière plastique (9) au moyen de rayons infrarouges, et
- un dispositif séparé pour chauffer le bord du film,
**caractérisé par** les autres éléments suivants :
- le dispositif pour le chauffage du bord de film comprend un dispositif de rayonnement infrarouge (21) et un dispositif de chauffage à air chaud (29), et
- le dispositif de rayonnement infrarouge (21) et/ou le dispositif de chauffage à air chaud (29) peuvent être pilotés ou réglés à des valeurs différentes pour la puissance de chauffage.

10. Système selon la revendication 9, **caractérisé en ce que** le dispositif de rayonnement infrarouge (21) est pourvu d'au moins un dispositif de focalisation, de préférence sous forme d'un réflecteur creux ou d'un miroir parabolique.

11. Système selon l'une ou l'autre des revendications 9 et 10, **caractérisé en ce que** les dispositifs de rayonnement infrarouges (21) sont pourvus d'un dispositif de refroidissement intégré, de préférence de conduites d'eau de refroidissement (37).

12. Système selon l'une des revendications 9 à 11, **caractérisé en ce que** les dispositifs de rayonnement infrarouge (21) sont agencés de telle sorte que les tabliers à pinces (17) des pinces déplacées (1) sont déplacés essentiellement au-dessous de ces dispositifs.

13. Système selon l'une des revendications 9 à 12, **caractérisé en ce que** les dispositifs de rayonnement infrarouge (21) sont agencés sensiblement parallèlement aux rails (3) servant au déplacement des pinces (1) et au-dessus du bord de film (9') et au-dessus de la limite supérieure de la zone d'introduction des leviers de pince (17).

14. Système selon l'une des revendications 9 à 13, **caractérisé en ce que** le dispositif de chauffage à air chaud (33) est pourvu, dans les zones de chauffage, d'une buse orientée sensiblement parallèlement et vers le bord de film (9') en déplacement, en particulier d'une buse à fente (35) qui est orientée sensiblement vers le bord de film (9').

15. Système selon l'une ou l'autre des revendications 13 et 14, **caractérisé en ce que** le canal à air chaud (31, 33) du dispositif de chauffage à air chaud (33) coiffe le dispositif de rayonnement infrarouge (21) de telle sorte que la buse de sortie (35) du dispositif de chauffage à air chaud se trouve en décalage, par rapport à la zone de rayonnement infrarouge, en direction du milieu du film en matière plastique.

16. Système selon l'une des revendications 9 à 15, **caractérisé en ce que** les dispositifs de rayonnement infrarouge (21) rayonnent à une longueur d'onde de 0,1 à 10 µm, de préférence de 0,5 à 3 µm.

17. Système selon l'une des revendications 9 à 16, **caractérisé en ce qu'**il est prévu, outre des tronçons d'installation pour le chauffage simultané du bord de film par des dispositifs de rayonnement infrarouge et des dispositifs ou buses de chauffage à air chaud, des tronçons d'installation qui comprennent uniquement un dispositif de rayonnement infrarouge (21) ou uniquement un dispositif de chauffage à air chaud (33).

18. Système selon l'une des revendications 9 à 17, dans lequel est prévu un dispositif de mesure pour mesurer la température du film, en particulier la température du bord du film au moyen de pyromètres (41, 43), **caractérisé en ce qu'**un agencement de pyromètres (41, 43) est orienté sensiblement sur le bord de film (9'), et **en ce qu'**un signal (S_{F+C}) par rapport à une température mixte peut être déterminé par celui-ci, qui résulte de la mesure effectuée pendant le cycle de mesure de la température de pince (S_{C}) et de la température de bord de film (S_{F}) à distance (a) entre les deux pinces voisines (1).

19. Système selon la revendication 18, **caractérisé en ce que** le pyromètre (43) est constitué par un pyromètre (43) à bande étroite, dont le temps de réglage est aussi important que l'alternance entre le passage des pinces (1) et le passage du bord de film (9') susceptible d'être détecté entre deux pinces (1) s'effectue sans fluctuations de signaux ou sensiblement sans fluctuations de signaux.

20. Système selon l'une ou l'autre des revendications 18 et 19, **caractérisé en ce qu'**il est prévu au moins un autre agencement de pyromètre (41) au moyen duquel uniquement la température des pinces (S_{C}) peut être déterminée.

21. Système selon la revendication 20, **caractérisé en ce que** la direction de détection (45) de l'agencement de pyromètre (41) prévu pour mesurer la température des pinces et présentant une composante tangentielle par rapport au bord de film (9') est orientée de telle sorte qu'au moins une pince respective (1) se trouve dans sa zone de détection et que le film ou le bord de film (9, 9') est essentiellement ou complètement masqué.

22. Système selon l'une des revendications 18 à 21, **caractérisé en ce que** la température de film (S_{F}) peut être déterminée à partir du signal mesuré (S_{C}) pour la température des pinces et du signal mixte (S_{F+C}) pour la température mixte au moyen d'un dispositif d'évaluation et/ou de commande électronique, par lequel peut être piloté de préférence le dispositif de chauffage de bord de film (29).

23. Système selon l'une des revendications 18 à 22, **caractérisé en ce qu'**il est prévu un dispositif de calibrage qui comprend une plaque de calibrage (51) située dans la zone de rayonnement des dispositifs de rayonnement infrarouge (21) et comprenant un palpeur de mesure associé (51') pour mesure la température, et **en ce qu'**il est prévu une unité d'évaluation électronique au moyen de laquelle un facteur de correction ou d'étalonnage pour déterminer la température réelle du film et/ou du bord de film (9, 9') peut être déduite de la comparaison de la température, mesurée par le palpeur de mesure (51'), de la plaque de calibrage (51) avec la température mesurée par le pyromètre (43).
